# EUROPÄISCHE PATENTANMELDUNG

(11) **EP 0 997 586 A1**
(43) Veröffentlichungstag der Anmeldung: **03.05.2000**
(21) Anmeldenummer: 98890313.4
(22) Anmeldetag: 29.10.1998
(51) Int. Cl.: E04C 2/52, F24D 3/14, F24D 3/16

(54) **Wandplatte zur Heizung und/oder Kühlung von Räumen**

(71) Anmelder: WATZEK, Wilhelm, A-2542 Kottingbrunn (AT)
(72) Erfinder: WATZEK, Wilhelm, A-2542 Kottingbrunn (AT)
(74) Vertreter: Rippel, Andreas, Dipl.-Ing.

(57) **Zusammenfassung**

Bei einer Wandplatte zur Heizung und/oder Kühlung von Räumen sind von einem Fluid durchströmte Rohre (3,5) zwischen einer aus wärmedämmenden Material bestehenden, an einer Wand anzubringenden Platte (1) und einer wärmeleitenden Schicht (4') angeordnet.

Die Rohre (3,5) weisen deren Oberfläche vergrößernde Vorsprünge (6), insbesondere Aufrauhungen, auf.

Dadurch wird die Wärmeübertragung verbessert.

## Beschreibung

Die Erfindung bezieht sich auf eine Wandplatte zur Heizung und/oder Kühlung von Räumen, bei der von einem Fluid durchströmte Rohre zwischen einer aus wärmedämmenden Material bestehenden, an einer Wand anzubringenden Platte und einer wärmeleitenden Schicht angeordnet sind.

Bei bekannten Einrichtungen zur Heizung und/oder Kühlung von Räumen werden die glatten Rohre auf die Oberfläche der Platte aus wärmedämmendem Material aufgelegt und mit dieser auf die verschiedenste Weise, z.B. mittels Rohrklemmschienen, verbunden. Diese so entstandenen Elemente werden nun auf der Wand befestigt und schließlich eine die Rohre umhüllende Mörtelschicht aufgebracht.

Nachteilig hiebei ist, daß die Mörtelschicht verhältnismäßig stark sein muß, nämlich stärker als der Durchmesser der Rohre, sodaß nicht nur das Gewicht solcher Wandplatten, sondern auch der Arbeitsaufwand für das Verlegen der Wandplatten groß ist. Es müssen erstens die Mörtelmengen zur Arbeitsstelle gebracht und zweitens auch verarbeitet werden. Um die Mörtelschicht auf die Platte aufbringen zu können, muß überdies vorher ein sogenannter Vorspritzer aufgebracht werden, wobei zwischen der Aufbringung des Vorspritzers und der endgültigen Mörtelschicht ein Trocknungszeitraum abgewartet werden muß. Auch ist die Verbindung zwischen den glatten Rohren und der Mörtelschicht, und damit die Wärmeübertragung nicht optimal.

In der DE 37 28 730 A1 ist eine Einrichtung beschrieben, bei der in Nuten von Platten liegende glatte Rohre von einem Mörtel aus einer Zement-Polymerdispersion umhüllt sind. Hier ist ein hoher Arbeitsaufwand bei der Herstellung der Einrichtung erforderlich und ein günstiger Wärmeübergang ist ebenfalls nicht zu erreichen.

Die Erfindung hat es sich zum Ziel gesetzt, eine Wandplatte der eingangs genannten Art zu schaffen, die die aufgezeigten Nachteile nicht aufweist, bei deren Verarbeitung sowohl ein weit geringerer Arbeits- und Materialaufwand erforderlich ist, als auch die Wärmeübertragung verbessert wird.

Erreicht wird dieses Ziel dadurch, daß die Rohre deren Oberfläche vergrößernde Vorsprünge, insbesondere Aufrauhungen aufweisen.

Eine weitere Einsparung an Material und Arbeitszeit an der Baustelle ergibt sich, wenn, nach einem weiteren Merkmal der Erfindung, die Wandplatte mit in die Schlitze eingebetteten Rohren und der Schicht aus wärmeleitendem Material sowie einer Putzschicht als an der Wand anzubringendes Fertigelement ausgebildet ist.

Zum sicheren Halt der Putzschicht ist es zweckmäßig, in diese in an sich bekannter Weise ein Putzgitter einzulegen.

Um die Rohre unabhängig von der Stärke der Putzschicht sicher zu halten, sind bei einer bevorzugten Ausführungsform der Erfindung die seitlich aus der Platte vorstehenden Rohrteile in Ausnehmungen eines Steges eines L- oder T-förmigen Profiles gehalten, das mit der Platte verbunden ist.

Die Vorsprünge der Rohre können auch als Rippen ausgebildet sein.

Nachstehend ist die Erfindung anhand von in den Zeichnungen dargestellten Ausführungsbeispielen näher beschrieben, ohne jedoch auf diese Beispiele beschränkt zu sein. Dabei zeigen: Fig. 1 in schaubildlicher Ansicht ein erfindungsgemäßes Fertigelement mit bereits eingelegten Rohren; Fig. 2 einen Querschnitt durch ein solches Fertigelement, wobei beidseitig der Mitte zwei verschiedene Arten dargestellt sind; Fig 2a einen Querschnitt durch ein erfindungsgemäßes Element mit aufgebrachter wärmeleitender Schicht; Fig. 3 eine teilweise geschnittene Seitenansicht eines erfindungsgemäßen Fertigelementes mit angesetztem T-Profil; Fig. 4 eine vergrößerte Teilansicht eines T-Profiles.

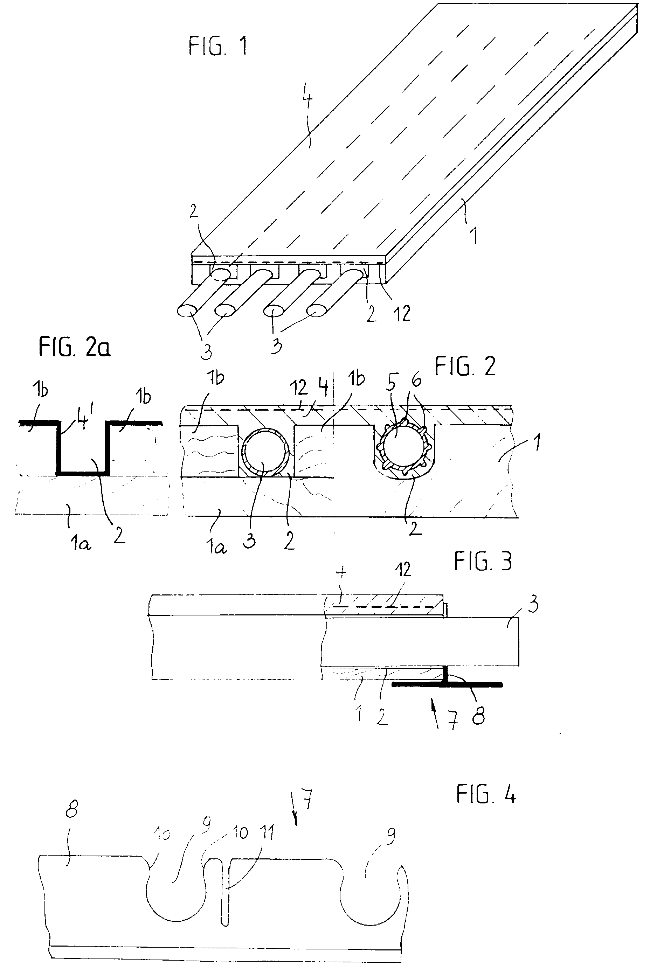

Gemäß Fig. 1 sind in einer Platte 1 aus wärmedämmendem Material Nuten 2 angeordnet. Die Platte 1 besteht vorzugsweise aus zementgebundener Holzwolle. Derartige Platten 1 sind z.B. unter der Handelsbezeichnung 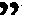 Heraklith" im Handel. Die Nuten 2 können leicht z.B. durch Fräsen oder dadurch hergestellt werden, daß auf eine Platte 1 Plattenstreifen geklebt werden (Fig. 2 linke Hälfte)

In diese Nuten 2 sind aufgerauhte Rohre 3 bzw. eine Rohrschlange eingelegt. Darüber ist eine nur dünne wärmeleitende Mörtelschicht 4 aufgebracht, in die ein Putzgitter 12 eingelegt ist.

Ein solches Fertigelement kann in der Fabrik bzw. Werkstatt hergestellt und von dort auf die Baustelle gebracht werden. Nach der Befestigung auf der Wand und Verbindung der Rohre 3 mit den Rohrenden benachbarter Elemente bzw. den entsprechenden Heiz- oder Kühlvorrichtungen, ist die Einrichtung bereits betriebsfertig. Natürlich können in üblicher Weise auf die Putzschicht 4 noch Fliesen, Tapeten oder sonstige Verkleidungselemente aufgebracht werden.

Aus Fig. 2 ist der Querschnitt eines erfindungsgemäßen Elementes ersichtlich, wobei in der rechten Hälfte der Zeichnung als Alternative ein Rohr 5 dargestellt ist, das mit Vorsprüngen 6 versehen ist, die in die Putzschicht 4 hineinragen. Dadurch wird die Wärmeübertragung sowie der Halt des Rohres 5 verbessert. Im gezeichneten Beispiel weist das Rohr 5 einen zahnradähnlichen Querschnitt auf, jedoch könnten auch andere Querschnitte verwendet werden.

Wie bereits ausgeführt wurde, können die Schlitze 2 durch Fräsen hergestellt werden; solche Schlitze 2 sind in der rechten Hälfte der Fig. 2 dargestellt. Es ist aber auch möglich, auf eine Platte 1a Plattenstreifen 1b so aufzukleben, daß zwischen den Plattenstreifen 1b die Schlitze 2 verbleiben; dies ist in der linken Hälfte der Fig. 2 und in Fig. 2a dargestellt.

Das Element nach Fig. 2a ist ein erfindungsgemäßes halbfertiges Element, bei dem auf die mit den Schlitzen 2 versehene Seite der Platte 1a,1b eine wärmeleitende Schicht 4' aufgebracht ist. Solche in der Werkstatt hergestellte Elemente werden an der Wand nebeneinander befestigt, anschließend ein Rohr schlangenförmig eingelegt und die Putzschicht 4 aufgebracht. Vorteil dieser Ausführung ist, daß die bei der Ausführungsform nach den Fig. 1 und 2 erforderlichen Muffenverbindungen zwischen den einzelnen Fertigelementen entfallen. Trotzdem kann ein Teil des erforderlichen wärmeleitenden Mörtels bereits in der Werkstatt aufgebracht werden.

Gemäß Fig. 3 ist am Ende einer Wandplatte eine T-förmige Schiene 7 vorgesehen, in die die Enden der Rohre 3 hineinragen. Die Ausbildung dieser Schiene 7 ist aus Fig. 4 ersichtlich. Demgemäß weist der eine Steg 8 der Schiene 7 Ausnehmungen 9 zur Aufnahme der Rohre 3 auf. Diese Ausnehmungen 9 besitzen Klemmwülste 10, sodaß sie die Rohre 3 festhalten können. Durch die Anordnung von seitlichen Schlitzen 11 ist eine Federwirkung der Wülste 10 gegeben. Solche Schienen 7 werden bei der Verlegung von Fußbodenheizungen bereits verwendet. Bei der im Rahmen der Erfindung erfolgten Verwendung solcher Schienen 7 erfolgt eine gegenseitige Verankerung von Platten 1 und Schienen 7: die T-Schiene 7 wird von den beiden Platten 1 an die Wand gedrückt und nach der Befestigung der Platten 1, z.B. durch Teller-Dübel, von diesen gehalten; andererseits halten die in die Ausnehmungen 9 gedrückten Rohre 3 die Platten 1.

Erfindungsgemäße Wandplatten sind auch zur Kühlung von Räumen einsetzbar. Da ein atmungsaktives, luftdurchlässiges, poröses Material verwendet wird, ist Luftfeuchte kein Problem. Bei Kühlung erfolgt eine Wasseraufnahme, bei Nicht-Kühlung eine Wasserabgabe.

Im Rahmen der Erfindung sind zahlreiche Abänderungen möglich. So könnten z.B. die Rohre 3 auch faserig aufgerauht sein.

## Patentansprüche

1. Wandplatte zur Heizung und/oder Kühlung von Räumen, bei der von einem Fluid durchströmte Rohre (3,5) zwischen einer aus wärmedämmenden Material bestehenden, an einer Wand anzubringenden Platte (1) und einer wärmeleitenden Schicht (4,4') angeordnet sind, **dadurch gekennzeichnet**, daß die Rohre (3,5) deren Oberfläche vergrößernde Vorsprünge (6), insbesondere Aufrauhungen, aufweisen.

2. Wandplatte nach Anspruch 1, **dadurch gekennzeichnet**, daß die Wandplatte mit in die Schlitze (2) eingebetteten Rohren (3,5) und einer Schicht (4') aus wärmeleitendem Material sowie einer Putzschicht (4) als an der Wand anzubringendes Fertigelement ausgebildet ist.

3. Wandplatte nach Anspruch 2, **dadurch gekennzeichnet**, daß in die Putzschicht (4) in an sich bekannter Weise ein Putzgitter (12) eingelegt ist.

4. Wandplatte nach einem der Ansprüche 1 bis 3, **dadurch gekennzeichnet**, daß die seitlich aus der Platte (1) vorstehenden Rohrteile in Ausnehmungen (9) eines Steges (8) eines L- oder T- förmigen Profiles (7) gehalten sind, das mit der Platte (1) verbunden ist.

5. Wandplatte nach einem der Ansprüche 1 bis 4, **dadurch gekennzeichnet**, daß die Vorsprünge (6) der Rohre (5) als Rippen ausgebildet sind.
